# FASCICULE DE BREVET EUROPEEN

(11) **EP 0 695 856 B1**
(45) Date de publication et mention de la délivrance du brevet: **14.04.1999**
(21) Numéro de dépôt: 95401820.6
(22) Date de dépôt: 03.08.1995
(51) Int. Cl.: F01D 5/30

(54) **Disque de compresseur de turbomachine muni d'une gorge circulaire asymétrique**
Kompressor-Robotscheibe mit asymmetrischer Umfangsnut
Compressor disc with asymmetric circumferencial groove

(30) Priorité: 03.08.1994 FR 9409595
(43) Date de publication de la demande: 07.02.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Stenneler, Jacques Marie Pierre, F-77820 Le Chatelet en Brie (FR)

(56) Documents cités:
- EP-A- 0 520 259
- FR-A- 2 504 975
- US-A- 2 295 012
- US-A- 4 460 315

## Description

### Domaine technique

L'invention concerne un ensemble disque et aubes de compresseur de turbomachine à disque comportant une gorge circulaire asymétrique destinée à recevoir des aubes à attache marteau.

Elle trouve une application dans le domaine de l'aéronautique.

### Etat de la technique

Dans une turbomachine, différentes sortes de liaisons entre les aubes et les disques sont connues. Le document FR-A-2 660 361 de GENERAL ELECTRIC décrit l'une de ces liaisons aube/disque, selon laquelle les pieds des aubes ont une forme d'hélice. Aussi, les angles de chaque côté du pied d'aube sont constamment différents par rapport à la surface du disque et ne sont égaux que vers le milieu du pied. Une telle liaison aube/disque est généralement utilisée pour des aubes brochées.

Le document FR-A-2 504 975 de ROLLS ROYCE décrit une aube à pied marteau dont le montage ne nécessite pas de rainure d'accès dans le disque.

Le document US-A-4 460 315 de GENERAL ELECTRIC décrit un pied d'aube à attache marteau, monté sur une virole conique avec des angles des faces d'appui β et β' égaux mais de pentes opposées et avec des surfaces de contact décalées radialement l'une par rapport à l'autre.

US-A-2.295.012 décrit un système de fixation d'aubes où le pied d'aube présente une face d'appui sur l'alvéole de disque qui est parallèle à l'axe radial de l'aube.

Le document FR-A-2 697 051 décrit un aubage de compresseur avec des alvéoles brochées dans lequel on augmente plus ou moins la matière à la périphérie du disque afin ce compenser les différences de forces dans l'alvéole.

Une autre conception de liaisons aube/disque, connue de l'homme du métier, consiste en des attaches axiales usinées à la périphérie des disques pour permettre aux pieds des aubes d'y être emboîtés.

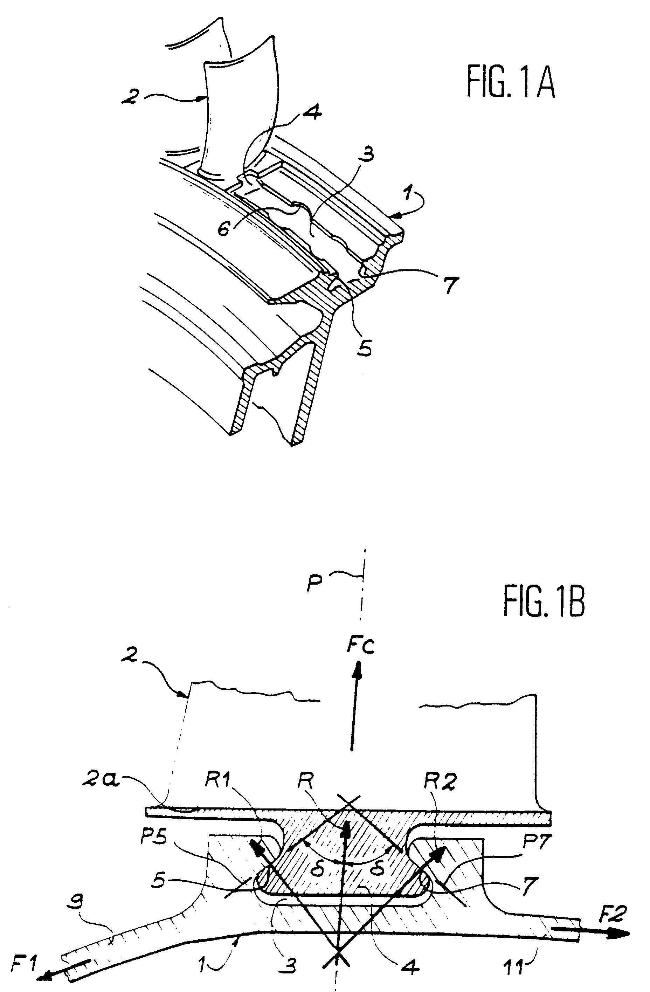

Encore une autre conception, tout aussi classique, de liaisons aube/disque consiste en une gorge circulaire usinée à la périphérie de chaque disque. Selon cette conception, les aubes montées dans ces gorges sont du type à "attache marteau" montées dans ces gorges. Une telle conception de liaison aube/disque a été représentée sur les figures 1A et 1B.

De façon plus précise, la figure 1A représente schématiquement, selon une vue en perspective, un disque conforme à cette dernière conception de liaison aube/disque et comportant une gorge circulaire symétrique dans laquelle sont insérés les pieds d'aubes à attache marteau. On a donc représenté, sur cette figure 1A, le disque 1 qui comporte la gorge circulaire 3. Cette gorge 3 comporte elle-même une lèvre amont 5 et une lèvre aval 7. L'aube 2, comme toutes les aubes montées sur le disque 1, comporte un pied d'aube 4 dont la forme ressemble sensiblement à un marteau. D'où l'appellation d'"aube à attache marteau".

Sur la figure 1B, on a représenté la même liaison aube/disque que celle de la figure 1A, mais selon une vue de face. On voit donc sur cette figure 1B, le pied d'aube 4 de l'aube 2, la gorge 3 du disque 1, ainsi que les lèvres amont 5 et aval 7. Cette figure 1B montre en outre que le pied d'aube 4 a une forme susceptible d'être maintenue dans la gorge 3 tout en étant limitée, en mouvement, par les lèvres 5 et 7 de la gorge 3. Ces lèvres 5 et 7 comportent des encoches d'introduction 6 permettant d'insérer les pieds d'aubes dans la gorge 3. Elles ont en outre pour rôle d'assurer le maintien du pied d'aube 4 à l'intérieur de la gorge 3 quelles que soient les forces exercées sur l'aube 2.

Cette figure 1B montre en outre que la gorge 3 est symétrique, les lèvres 5 et 7 ayant des courbures dont les pentes respectives P5 et P7 sont inclinées d'un même angle δ par rapport à un plan P perpendiculaire à l'axe de rotation du disque. Cet axe de rotation n'a pas été représenté sur la figure 1B pour des raisons de simplification de cette figure ; on peut toutefois préciser qu'il est sensiblement parallèle à la base 2a de l'aube 2.

Les angles δ entre les pentes P5 et P7 des courbures des lèvres 5 et 7 et le plan P étant égaux, on comprend que, dans ce cas, les composantes R1 et R2 de l'effort centrifuge Fc induit par l'aube 2 sur les lèvres 5 et 7 de la gorge 3 (qui sont aussi appelées efforts de contact sur les lèvres 5 et 7) sont symétriques par rapport au plan P et égales. La force résultante R de ces composantes R1 et R2 est donc de même sens et de même direction que l'effort centrifuge Fc et leurs points d'origine sont alignés sur l'axe radial du disque.

Outre cet effort centrifuge Fc, d'autres forces sollicitent la liaison aube/disque, notamment les sollicitations F1 et F2 transmises par les viroles 9 et 11 qui relient les différents disques du compresseur entre eux. Ces sollicitations F1 et F2 résultent des efforts axiaux d'origine aérodynamique induits par les aubes ; elles diffèrent donc d'un étage d'aubes à un autre.

De plus, pour des raisons de conception, les viroles amont et les viroles aval d'un même disque ont, en général, des géométries différentes. Le plus souvent, la virole amont (virole 9 sur la figure 1B) est conique tandis que la virole aval (virole 11 sur la figure 1B) est cylindrique. Il s'ensuit donc que la lèvre amont 5 et la lèvre aval 7 de la gorge circulaire 3 ne sont pas soumises aux mêmes sollicitations.

D'autre part, avec le taux de compression atteint aujourd'hui dans les turbomachines, des différences de température très sensibles sont souvent constatées entre l'amont et l'aval des disques de compresseur.

En conséquence, des différences importantes dans les durées de vie des lèvres aval et amont sont très souvent constatées, ce qui entraîne des frais de maintenance supplémentaires.

Enfin, il est évident que la symétrie de l'attache introduit le risque de monter "à l'envers" l'aube dans la gorge du disque, c'est-à-dire mettre le bord de fuite de l'aube vers l'amont, à la place du bord d'attaque, et vice versa.

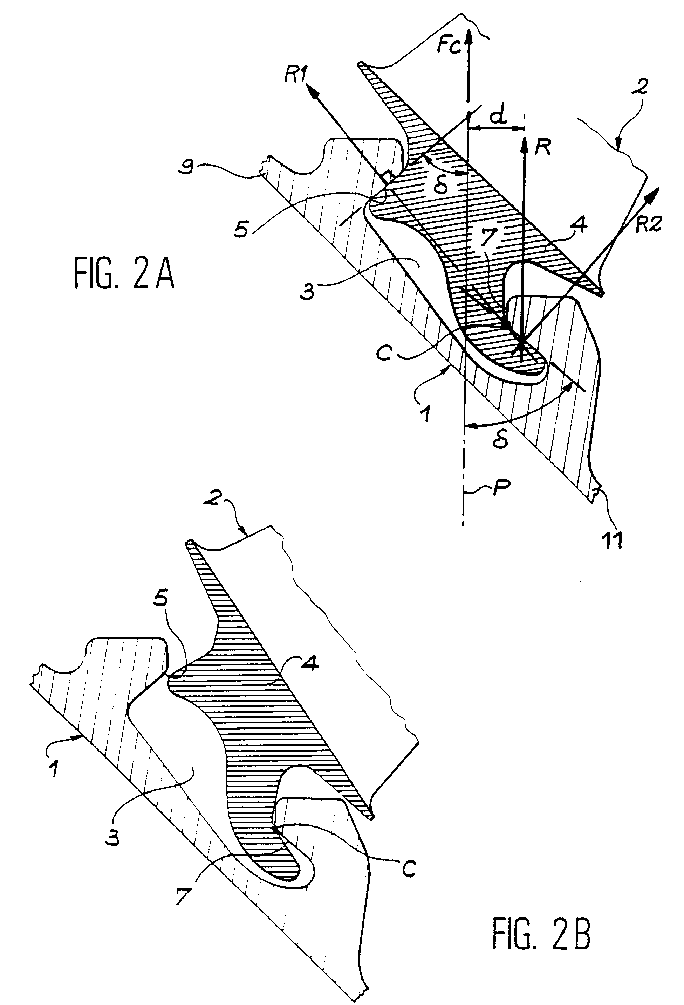

Sur les figures 2A et 2B, on a représenté des aubes à attache marteau montées dans le disque 1 d'une veine conique, c'est-à-dire d'une veine inclinée comme on peut en trouver dans un moteur double flux à très grand taux de dilution. La conicité de la veine nécessite un écart important entre les positions radiales des faces d'appui des lèvres 5 et 7, c'est-à-dire des faces intérieures à la gorge contre lesquelles le pied d'aube est en appui ; cet écart influe sur la position axiale de la résultante R des composantes R1 et R2 de l'effort centrifuge sur les lèvres 5 et 7. Cette résultante R se trouve alors désalignée de l'effort centrifuge Fc, ce qui signifie que le sens et la direction des faces R et Fc sont identiques mais que leurs origines ne sont pas alignées sur l'axe radial du disque.

La référence d, sur la figure 2A, représente l'écart entre la résultante R et la force centrifuge Fc exercée au centre de gravité de l'aube 2. Un tel désalignement produit, généralement, un couple parasite sur l'aube 2.

Sur cette figure 2A, on a représenté un exemple de veine d'une conicité telle que l'axe de la composante R1 passe à proximité de la face d'appui de la lèvre aval 7.

Sous sollicitation axiale, les tolérances fonctionnelles et les jeux entre le pied d'aube 4 et la gorge 3 du disque 1 permettent à l'aube 2 de pivoter autour du centre de rotation C situé à l'extrémité de la lèvre aval 7.

Sur la figure 2B, on a représenté le même exemple de liaison aube/disque que sur la figure 2A, mais dans la situation où l'aube 2 est en train de pivoter autour du centre de rotation C. Cette figure 2B montre bien que le pied d'aube 4 peut s'échapper hors de la gorge 3 du disque.

### Exposé de l'invention

La présente invention a justement pour but de remédier aux inconvénients cités précédemment. A cette fin, elle propose dans un ensemble disque et aubes un disque de compresseur dont la gorge circulaire comporte des lèvres aval et amont asymétriques l'une par rapport à l'autre, la lèvre amont ayant une courbure de pente (P5) inclinée d'un angle α par rapport à ce plan (P) perpendiculaire à l'axe de rotation et la lèvre aval ayant une courbure de pente (P7) inclinée d'un angle β par rapport audit plan perpendiculaire à l'axe de rotation, l'angle α étant plus grand que l'angle β et les angles α et β étant non nuls.

### Brève description des dessins.

- la figure 1A, déjà décrite, représente une vue en perspective d'aubes montées dans la gorge d'un disque selon l'art antérieur;
- la figure 1B, déjà décrite, représente une vue de face de la liaison aube/disque de la figure 1A ;
- la figure 2A, déjà décrite, représente une vue de face d'une liaison aube/disque de l'art antérieur dans une veine fortement unique ;
- la figure 2B, déjà décrite, représente une vue de face de la liaison aube/disque de la figure 2A, dans le cas où l'aube pivote hors de la gorge du disque ;
- la figure 3 représente une vue de face d'une liaison aube/disque selon l'invention ;
- la figure 4A représente une vue de face d'une liaison aube/disque conforme à l'invention telle qu'on la trouve dans une veine fortement conique ; et
- la figure 4B représente une vue de face de la liaison aube/disque de la figure 4A, dans le cas où l'aube pivote autour d'un centre de rotation.

### Exposé détaillé de modes de réalisation

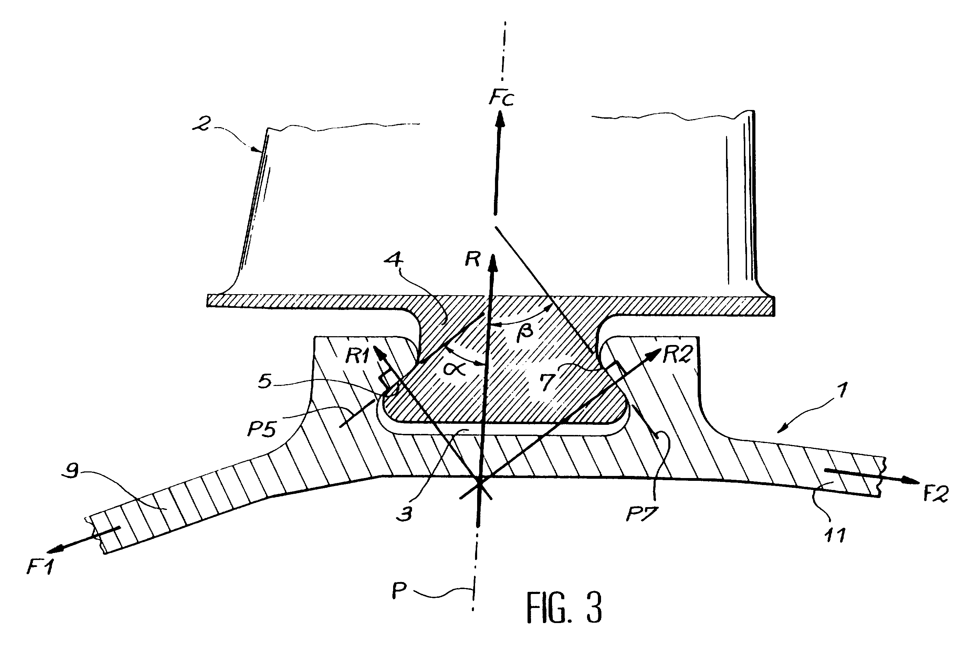

Sur la figure 3, on a représenté, selon une vue de face, la liaison aube/disque conforme à l'invention. Comme sur la figure 1B, décrivant l'art antérieur, on voit, sur cette figure 3, une aube 2 dont le pied d'aube 4 est introduit dans la gorge circulaire 3 du disque 1. On a représenté également sur cette figure 3, les lèvres amont 5 et aval 7 de la gorge circulaire 3. Comme on peut le voir, on a représenté sur cette figure la pente de la courbure de la lèvre aval 7 ; cette pente est référencée P7. De même, on a représenté la pente de la courbure de la lèvre amont 5 ; cette pente porte la référence P5.

Comme on peut le voir sur la figure 3, la pente P7 de la courbure de la lèvre 7 forme un angle β avec le plan P perpendiculaire à l'axe de rotation du disque, cet axe de rotation n'ayant pas été représenté pour les raisons données précédemment lors de la description de la figure 1B. Parallèlement, la droite représentant la pente P5 de la courbure de la lèvre amont 5 forme un angle α avec le plan P.

Conformément à l'invention, et comme on peut le constater sur cette figure 3, l'angle α est strictement différent de l'angle β. Dans le cas de la figure 3, l'angle α est supérieur à l'angle β, les angles α et β étant non nuls.
Autrement dit, l'angle β entre le plan P et la face d'appui de la lèvre 7 est plus faible que l'angle α compris entre le plan P et la face d'appui de la lèvre amont 5. Cette disposition des orientations des pentes P5 et P7 entraîne des efforts de contact dus à l'effet centrifuge R1 et R2 différents. L'effort de contact R2, dû à la force centrifuge sur la face d'appui de la lèvre 7, est inférieur strictement à l'effort de contact R1 dû à la force centrifuge sur la face d'appui de la lèvre 5. Aussi, la résultante R de ces efforts de contact R1 et R2 est déplacée vers l'aval du disque. La disposition axiale aube/disque est donc différente par rapport à la disposition décrite dans l'art antérieur (figure 1B).

En conséquence, pour obtenir des durées de vie équivalente sur chacune des lèvres 5 et 7 de la gorge circulaire 3, on peut optimiser le dimensionnement de ces angles α et β, en tenant compte de la combinaison des efforts de contact (R1-R2) et des efforts transmis par les viroles 9 et 11 (F1-F2), ainsi que des caractéristiques en fatigue du matériau dans lequel est réalisé le disque 1, ces caractéristiques étant dépendantes des températures en aval et en amont du disque.

On comprendra en outre aisément, que le fait d'utiliser des liaisons aubes/disques dans lesquelles la gorge 3 du disque est asymétrique permet de faciliter le montage de l'aube dans le disque en empêchant le montage de l'aube "à l'envers", puisque l'une des lèvres de la gorge 3 a une courbure plus importante que l'autre.

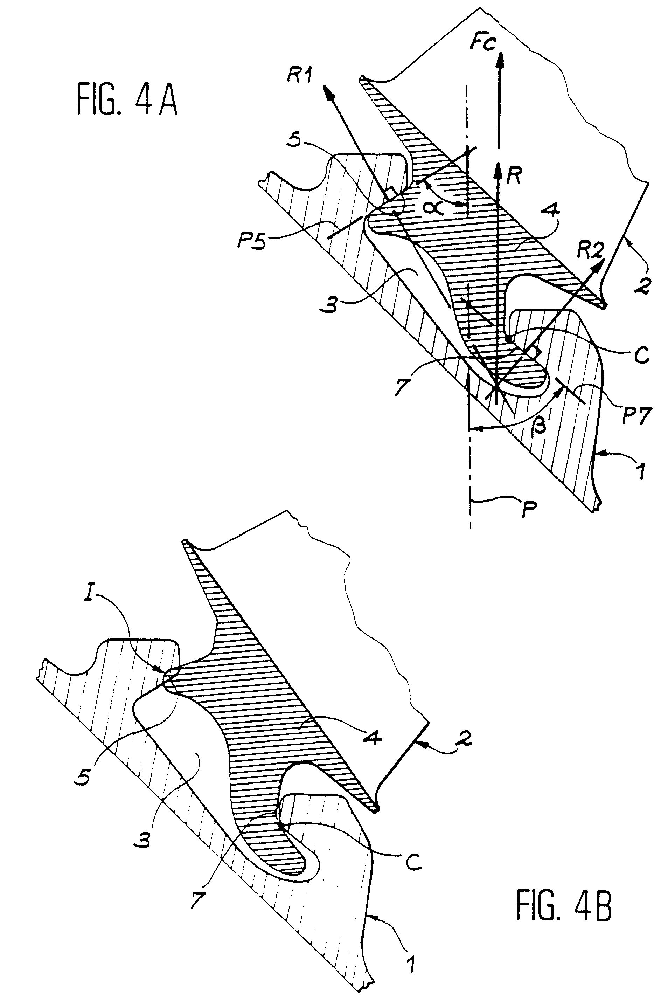

Sur la figure 4A, on a représenté une liaison aube/disque conforme à l'invention et appliquée à une veine fortement inclinée. Cette veine est similaire à celle représentée sur la figure 2A montrant une liaison aube/disque de l'art antérieur dans une veine fortement inclinée.

Sur cette figure 4A, tout comme sur la figure 2A, on a représenté une partie du disque 1 avec sa gorge circulaire 3. Du fait de l'inclinaison de la veine, on peut remarquer que, comme sur la figure 2A, le pied d'aube 4 a une forme sensiblement différente de la forme du pied d'aube 4, montrée sur la figure 1B ou sur la figure 3. Ceci s'explique par le fait de l'importante inclinaison de la veine. Néanmoins, de tels pieds d'aubes 4 font également partie du type d'aubes à attache marteau, puisque la forme de ce pied d'aube ressemble sensiblement à un marteau.

Sur cette figure 4A, on voit, en outre, que le pied d'aube 4 est en appui, d'une part, sur la face d'appui de la lèvre amont 5 et, d'autre part, sur la face d'appui de la lèvre aval 7. Comme sur la figure 3, on a référencé P5 la pente de courbure de la lèvre amont 5 et P7 la pente de courbure de la lèvre aval 7. Les efforts de contact R1 et R2 sont donc perpendiculaires, respectivement, à ces pentes P5 et P7. La résultante de ces efforts de contact R1 et R2 est référencée R. La pente P5 forme avec le plan P perpendiculaire à l'axe de rotation du disque 1, un angle référencé α. Parallèlement, la pente P7 de la lèvre aval 7 forme avec ce même plan P un angle β. Conformément à l'invention, l'angle α entre la fente P5 de la lèvre amont 5 et le plan P est strictement supérieur à l'angle β entre la pente P7 de la lèvre aval 7 et le plan P.

Si l'on compare cette figure 4A à la figure 2A de l'art antérieur, on voit aisément qu'en utilisant de tels angles α et β, avec α > β, on obtient un alignement de l'effort centrifuge Fc de l'aube avec la résultante R des efforts de contact R1 et R2 sur les faces de contact du pied d'aube 4 en appui sur les lèvres amont 5 et aval 7. Cet alignement de l'effort centrifuge Fc avec la résultante R de l'effort de contact permet d'éviter la création d'un couple parasite, comme cela est le cas dans l'art antérieur.

Une différence de valeur des angles α et β permet d'obtenir des contraintes mécaniques différentes de part et d'autre de la gorge 3, c'est-à-dire aux environs de la lèvre amont 7 et de la lèvre aval 5. Le choix d'un angle α supérieur à l'angle δ, de l'art antérieur, lui-même supérieur à l'angle β permet, en tenant compte des efforts de contact R1 et R2 et des efforts transmis par les viroles F1 et F2, d'obtenir une durée de vie sensiblement équivalente, voire égale, pour le côté amont de la gorge circulaire 3 et le côté aval de cette gorge.

En outre, cette différenciation des angles α et β permet d'améliorer la tenue de l'aube 2 à l'arrachement, c'est-à-dire la tenue de l'aube lorsque celle-ci est soumise à des sollicitations axiales importantes, telles que, par exemple, l'ingestion d'oiseaux dans le compresseur.

Sur la figure 4B, on a représenté la même liaison aube/disque que sur la figure 4A, mais dans le cas où l'aube 2, soumise à des sollicitations axiales importantes, pivote autour du centre de rotation C, constitué par l'extrémité de la lèvre aval 7. Si l'on compare cette figure 4B à la figure 2B de l'art antérieur, on comprend aisément l'avantage de choisir un angle α supérieur à l'angle δ de l'art antérieur, ce qui correspond à choisir une lèvre amont 5 de courbure plus forte que celle de l'art antérieur. Parallèlement, le choix d'un angle β inférieur à l'angle δ de la figure 2B revient à choisir une lèvre aval 7 ayant une courbure de pente moins importante que celle de l'art antérieur. Ces différences, par rapport à l'art antérieur expliquent que, sous sollicitation axiale, l'aube 2 qui pivote autour du centre de rotation C ne puisse s'échapper de la gorge circulaire 3 puisque son pied d'aube 4 est retenu par la lèvre amont 5. Sur cette figure 4B, on a référencé I, le point d'impact entre le pied d'aube 4 et la lèvre 5 de la gorge circulaire 3 dans le cas où l'aube 2 pivoterait autour du centre de rotation C.

Ainsi, une telle liaison aube/disque munie d'une gorge cylindrique 3 asymétrique entre le côté amont et le côté aval du disque 1, a pour avantage, d'une part, de permettre l'obtention d'une durée de vie des pièces en aval et des pièces en amont du disque sensiblement équivalente, voire même égale et, d'autre part, d'obtenir un alignement de l'effort centrifuge Fc de l'aube avec la résultante R des efforts de contact des aubes dans la gorge du disque, ce qui évite la création de couples parasites.

En outre, cette liaison aube/disque, conforme à l'invention, assure une amélioration, pour les compresseurs à veine fortement inclinée, de la tenue à l'arrachement des aubes soumises à des sollicitations axiales importantes.

## Revendications

1. Ensemble disque et aubes de compresseur de turbomachine comportant un disque apte à effectuer des mouvements de rotation autour d'un axe de rotation et comportant à sa périphérie une gorge circulaire (3) apte à recevoir des pieds d'aubes (4) ayant sensiblement une forme de marteau, ladite gorge circulaire comprenant une lèvre amont (5) et une lèvre aval (7) contre lesquelles les pieds d'aubes sont en appui, la lèvre amont et la lèvre aval de la gorge circulaire étant asymétriques par rapport à un plan perpendiculaire (P) à l'axe de rotation, la lèvre amont ayant une courbure de pente (P5) inclinée d'un angle α par rapport à ce plan perpendiculaire à l'axe de rotation et la lèvre aval ayant une courbure de pente (P7) inclinée d'un angle β par rapport audit plan perpendiculaire à l'axe de rotation, l'angle α étant plus grand que l'angle β, et les angles α et β étant non nuls.

2. Ensemble disque et aubes de compresseur de turbomachine selon la revendication 1 caractérisé en ce que les forces de contact R1 et R2 dues aux forces centrifuges exercées par l'aube respectivement sur la lèvre amont (5) et sur la lèvre aval (7) sont telles que R1 est supérieure à R2 et la force résultante R de ces forces R1 et R2 est telle que la résultante est déplacée vers l'aval du disque.

## Patentansprüche

1. Scheibe/Schaufeln-Gesamtanordnung eines Turbomaschinen-Kompressors, bestehend aus einer Scheibe, die Rotationsbewegungen um eine Rotationsachse ausführen kann und an ihrem Umfang eine umlaufende Nut (3) aufweist, in denen im wesentlichen hammerförmige Schaufelfüsse (4) Aufnahme finden, wobei die genannte Umfangsnut eine vordere Lippe (5) und eine hintere Lippe (7) aufweist, an denen sich die Schaufelfüsse in Anlage befinden, wobei die vordere Lippe und die hintere Lippe der Umfangsnut, bezogen auf eine senkrechte Ebene (P) zur Rotationsachse, asymmetrisch sind, indem die vordere Lippe eine Neigungskrümmung (P5) aufweist, die um einen Winkel α zu dieser senkrechten Ebene (P) zur Rotationsachse geneigt ist, und die hintere Lippe eine Neigungskrümmung (P7) aufweist, die um einen Winkel β zu dieser senkrechten Ebene (P) zur Rotationsachse geneigt ist, wobei der Winkel α größer ist als der Winkel β und die Winkel α und β ungleich Null sind.

2. Scheibe/Schaufeln-Gesamtanordnung eines Turbomaschinen-Kompressors nach Anspruch 1,
**dadurch gekennzeichnet**, daß die aufgrund der Zentrifugalkräfte von der Schaufel auf die vordere Lippe (5) und die hintere Lippe (7) ausgeübten Berührungskräfte R1 bzw. R2 so beschaffen sind, daß R1 größer ist als R2 und die Resultierende R dieser Kräfte R1 und R2 so beschaffen ist, daß die Resultierende zur hinteren Seite der Scheibe hin verschoben wird.

## Claims

1. A disc and blade assembly of a turbomachine compressor comprising a disc rotatable around a rotational axis and formed on its periphery with a circular groove (3) adapted to receive substantially hammer-shaped blade roots (4), the circular groove comprising an upstream lip (5) and a downstream lip (7) on which the blade roots bear and which are asymmetrical relative to a plane (P) perpendicular to the rotational axis, the upstream lip having a curvature slope (P5) inclined at an angle α to the plane P and the downstream lip having having a curvature slope (P7) inclined at an angle β to the plane (P), the angle α being greater than the angle β, and the angles α and β being other than zero.

2. A disc and blade assembly of a turbomachine compressor according to claim 1, characterised in that the contact forces R1 and R2 due to the centrifugal forces exerted by the blade on the upstream lip (5) and the downstream lip (7) respectively are such that R1 is greater than R2 and the resultant force R of the forces R1 and R2 is such that the resultant is displaced towards the downstream side of the disc.
